## Europäisches Patentamt

## European Patent Office

## Office européen des brevets

(11) Publication number: **0 325 593**
**B1**

(12) **EUROPEAN PATENT SPECIFICATION**

(45) Date of publication of patent specification: **28.11.90**

(51) Int. Cl.⁵: **B 62 D 27/06, B 62 D 33/02**

(21) Application number: **87905913.7**

(22) Date of filing: **01.09.87**

(86) International application number:
**PCT/SE87/00390**

(87) International publication number:
**WO 88/01584 10.03.88 Gazette 88/06**

(54) **A LOCKING DEVICE FOR SIDE BOARDS ON A VEHICLE PLATFORM.**

(30) Priority: **01.09.86 SE 8603654**

(43) Date of publication of application:
**02.08.89 Bulletin 89/31**

(45) Publication of the grant of the patent:
**28.11.90 Bulletin 90/48**

(84) Designated Contracting States:
**AT BE CH DE FR GB IT LI NL SE**

(56) References cited:
**DE-A-2 936 528**
**DE-A-3 108 930**
**SE-A-84 049 022**
**SE-B- 443 542**
**SE-C- 218 048**

(73) Proprietor: **Rosén, Göran**
**Dieselstrasse 2-6**
**D-6352 Ober-Mörlen (DE)**

(72) Inventor: **Rosén, Göran**
**Dieselstrasse 2-6**
**D-6352 Ober-Mörlen (DE)**

(74) Representative: **Roth, Ernst Adolf Michael et al**
**GÖTEBORGS PATENTBYRA AB Box 5005**
**S-402 21 Göteborg (SE)**

Courier Press, Leamington Spa, England.

## Description

The present invention refers to a device at stanchions on vehicle platforms or the like and comprising at least one first locking means displaceably arranged in the stanchion and intended to cooperate with a locking member at the side board of the platform, at least one second locking means arranged to lock the stanchion with respect to the platform by way of a clamp or the like attached to the platform, and an operating lever for operating both the first and second locking means, at which a link is pivotally mounted between the operating lever and the second locking means.

Background of the Invention

Locking devices of the above mentioned kind and such as defined in the preamble of Claim 1 are previously known through for example the Swedish patent no. 218.048 (= GB patent no. 1.235.490), where one and the same operating lever provides a locking of the stanchion to the platform as well as a locking of the side board to the stanchion. These devices comprises a strong spring, which in the closed position of the operating lever exerts a heavy pressure on the locking wedge, which locks the stanchion to the side edge of the vehicle platform. The locking wedge is in this way effectively fixed in its position, but also fixes the lock bolt within the stanchion. This has no negative effect as long as the lock bolt is used as faucet, which cooperates with, i.e. is inserted into a locking sleeve recessible into the stanchion at the side board, and the faucet and locking sleeve are not deformed. In order to provide a good cooperation between the parts there is however required a relatively high fitting accuracy between the parts.

The vehicle platform and its sideboards are however often exerted to a rough treatment at loading and unloading, but also during driving if the load is not sufficiently secured and can be displaced. Thus one has to count with that the fitting accuracy between these locking details after the time of use is not the same as when the locking device was delivered, which can lead to irritation over the bad function of the locking device.

Another drawback with this type of locking device is that if no special measures are taken, the operating lever will, when it is brought out of its locking position, pivot upwards so quickly that the person handling the locking device can be injured. One has for a long time tried to solve both these problems and the difficulty has been that the strong spring is needed to keep the locking wedge in place and to hold the operating lever in its downward position, at the same time as the spring counteracts the locking function which is aimed at if the faucet displaceable in the stanchion would be used for turning a clapper, as locking means for fixing the locking member of the side board. One has therefore had to arrange a toggle joint axle between the faucet and the clapper (DE—A1 2.936.528), the toggle joint axis of which in the locked position of the clapper has passed the dead point position, so that the pressure from the sideboard on the clapper is led to the stanchion and not into the lever. Due to shaking motions and inevitable play in the bearing axles it can however occur that the toggle joint passed said dead point position, so that the whole load is exerted to the lever and the locking device is unintentionally opened. A further drawback with this construction is that the clapper does not continuously exert a pressure against the locking member of the side board, which leads to vibrations between the parts, which can be very irritating and besides leads to a hard wear of the bearings.

The Purpose and Most Important Features of the Invention

The object of the present invention is to eliminate the above mentioned drawbacks and provide a device of the kind mentioned above, where a safe vibration-less fixing of the two locking means of the stanchion is achieved, i.e. the locking wedge which locks the stanchion to the vehicle platform and the locking means which locks the sideboard to the stanchion, and where the upward force at the opening of the operating lever is so balanced that it is not injurious to the personnel. These objects have been solved by the fact that in the stanchion there is arranged at least one shoulder designed to serve as a stop for at least one abutment surface on the link when the operating lever is located in its downward locking position and the locking means are in their locked position, and that the two locking means in locked position are loaded by a spring, which in the released position of said locking means is expanded.

Description of the Drawings

The invention will now be closer described with reference to some embodiments shown in the accompanying drawings.

Fig. 1 shows a vertical section through a stanchion according to the invention with its both locking means in open position,

Fig. 2 shows a corresponding section, but with one, the second locking means, in locked position,

Fig. 3 shows a corresponding section, but with both locking means in locked position,

Fig. 4 is a section according to the line IV—IV in fig. 3,

Fig. 5 shows an analogous section of the upper portion of the stanchion shown in fig. 1 or 2 according to a modified embodiment,

Fig. 6 shows a section corresponding to fig. 5 but with the locking means in closed position,

Fig. 7 shows the upper portion of a stanchion with an extension piece placed thereon, partly in section and shown in locked position,

Fig. 8 shows the stanchion according to fig. 7 in a front view and partly in section.

Description of the Embodiments

On the drawings the numeral 10 denotes a side edge profile of a vehicle platform or the like, at which a locking clamp 11 or the like is fixed. This extends in through a recess 12 in the lower portion of a stanchion 13. In the clamp 11 there is insertable a wedge-shaped locking means 14, which through a link 15 is displaceable in vertical direction by means of an operating lever 16. The operating lever 16 is further pivotally connected to a rod 17, which extends upwards in the stanchion 13 and which is guided by an opening in a cross plate 18. This also forms a stop for a screw spring 19 arranged about the rod 17, the opposite end of the screw spring acting upon a broader portion 20 of the rod 17. At the upper end of the rod 17 there is pivotally mounted a second locking means 21 in the form of a clapper 24 about an axle 22, which clapper also is mounted about an axle 23 which is fixed at the stanchion 13. The clapper 24 is provided with a bowl-shaped active surface 24a, which forms one hinge portion to a pendulum attachment for the side boards 25 of the platform, fig. 4, at which the other hinge portion is provided by a tap like locking member 26 attached to the upper edge of the respective side board 25. This locking member is at its end cooperating with the clapper 21 provided with a head 31, which can receive extension strains from the sideboards 25. The side boards 25 are also at their lower edge mounted about hinges (not shown) for an alternative opening of the sideboards at the top or the bottom.

The spring 19 arranged about the rod 17 provides a spring force downwards, which guarantees the locking position of the locking wedge 14 in the clamp 11. In order to provide a corresponding spring force upwards and a pressing force on the clapper 24 in towards the tap 26 there is arranged a second spring 27 in the link 15 clamped between an abutment surface 34 on the upper surface of the locking wedge 14 and the bearing axle 28 of the link at the operating lever 16. The bearing axle 29 of the link 15 at the wedge 14 is displaceable in an oblong hole 30 arranged in the wedge 14.

A locking shoulder 32 is arranged in the stanchion 13 just above the recess 12 for the clamp 11. The locking shoulder 32 makes a stop for an abutment surface 33 arranged at the lower end of the link 15 in locking position according to fig. 3, at which a distinct locking position for the clapper 24 is provided. This cannot be brought out of its locking position when the lever 16 and the link 15 takes the position shown in fig. 3, even when extension strains from the side boards are exerted.

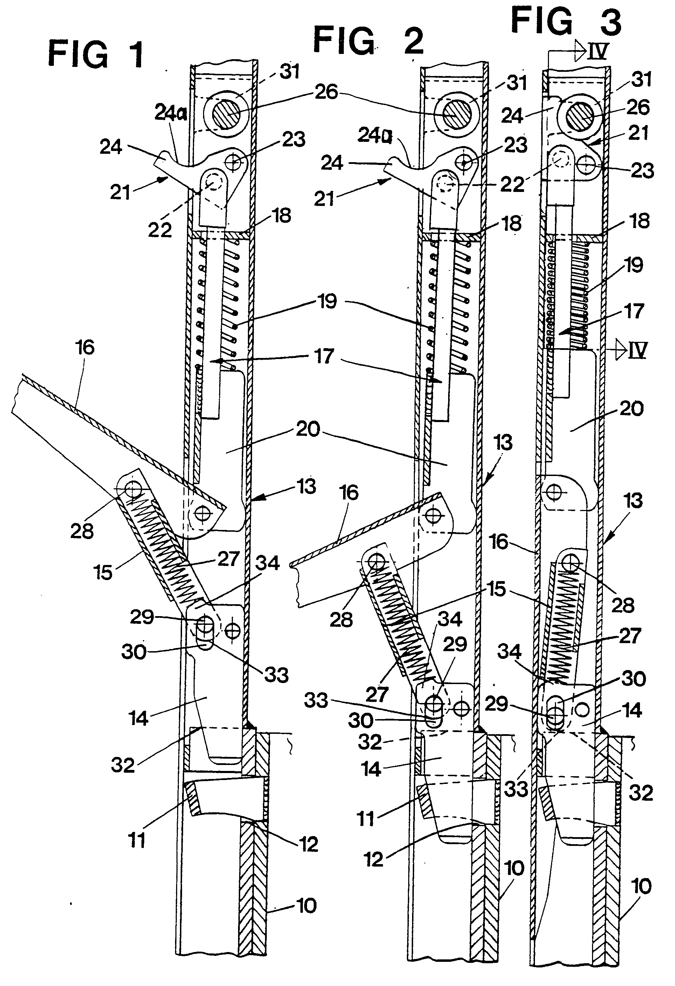

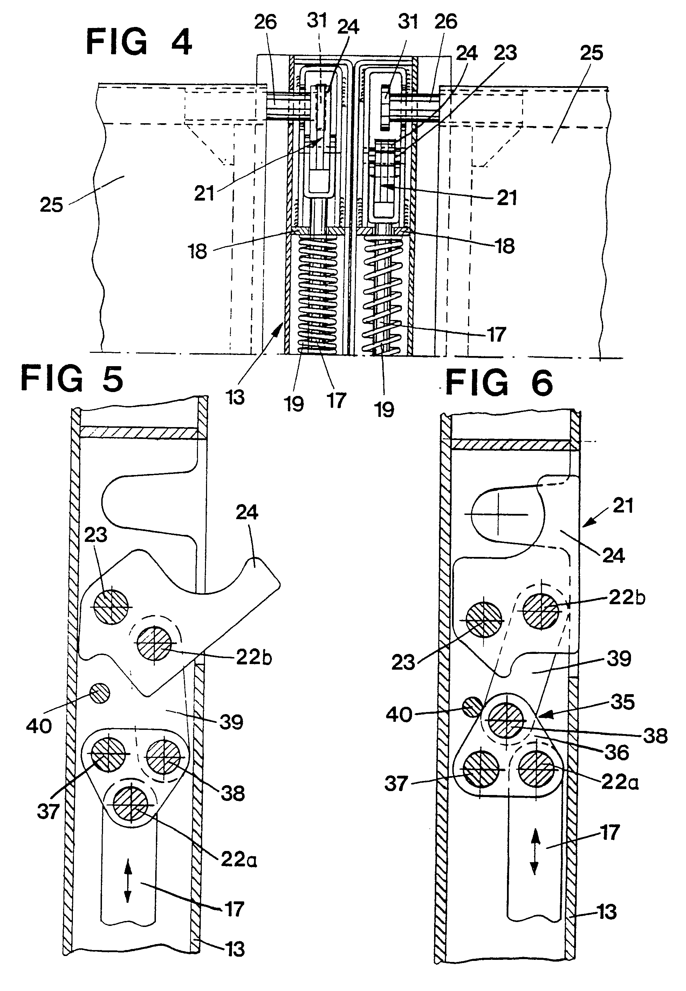

In a completely opened position of the operating lever 16 shown in fig. 1 both the locking wedge 14 and the clapper 24 are brought out of locking position, so that the stanchion 13 can be pivoted downwards about a lower pivot pin (not shown) when the side boards 25 have been pivoted downwards about their lower hinges. In the intermediate position of the operating lever 16, shown in fig. 2, the stanchion 13 is locked to the platform, but not to the side boards 25 while the lever in the position shown in fig. 3 it is locked both to the platform and the side boards. The upper hinge 26 can in this position be active as pendulum attachment, if the lower hinge parts (not shown) of the sideboard 25 are brought out of engagement with the platform.

In fig. 4 is to the left shown the clapper in closed position and to the right in open position. When the rod 17 has been brought from the position shown in fig. 2 to the one in fig. 3 the clapper 21 is forced to be pivoted upwards and with its bowl-shaped active surface 24a slide in over and into engagement with the tap 26. This movement can be made without problems even at slighter discrepancies in the dimensional accuracy of the locking mechanism, which can occur after a certain time of use.

In the embodiment according to figs. 5 and 6 there is arranged a toggle joint 35 between the rod 17 and the clapper 24 comprising a first toggle joint link 36 consisting of a triangular plate mounted about a pivot pin 37 fixed to the stanchion 13. At this toggle joint link there is also pivotally mounted the rod 17 by way of the pivot pin 22a, as well as the toggle joint axle 38 itself, which makes a pivot pin also for the second toggle joint link 39. This is mounted about the pivot pin 22b at the clapper 24. Through this design an increased closing force is provided.

In the stanchion 13 is further just opposite the toggle joint axle 38 arranged a stop 40 preventing the toggle joint to take a fully extended position or to pass the dead point position of the toggle joint. The center of the toggle joint axle 38 is very close to a line through the pivot pins 22b and 37, so that a stress-relieving of the torsional moment exerted by the locking member 26 on the locking clapper is achieved, but at the same time also is effected by the spring pressure from the spring 27 at the link 15, which is possible by the fact that the tap 29 can be displaced in the oblong hole 30 in the wedge 14.

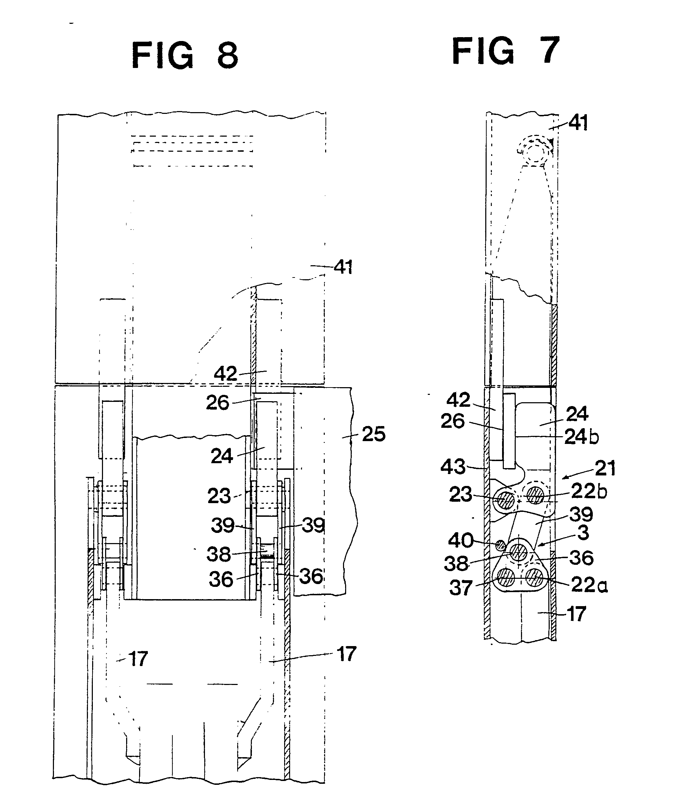

One and the same stanchion can be provided with several locking means connected in series of the type shown in the previous embodiment or of the type shown in fig. 7. In this embodiment the clapper 24 has a plane contacting surface 24b, which is intended to cooperate with a likewise plane locking member 26 at the sideboard 25.

The locking means itself 21 can also have a double function, that is it can also lock an extension piece 41 connected to the stanchion in the form of a strut which can support the roof, tarpaulin or the like of the vehicle platform. Such extensions are previously known through SE patent no. 328.792 (= GB patent no. 1.231.124) and which is provided with welded stopping discs 42, which in the connected position of the parts, which is shown in fig. 7 with continuous lines, are in contact with the rear side 43 of the stanchion.

**Claims**

1. A device at stanchions (13) on vehicle platforms (10) or the like and comprising at least one first locking means (21) displaceably arranged in the stanchion and intended to cooperate with locking member (26) at the side board (25) of the platform, at least one second locking means (14) arranged to lock the stanchion (13) with respect to the platform (10) by way of a clamp (11) or the like attached to the platform, and an operating lever (16) for operating both the first and second locking means (21 and 14), at which a link (15) is pivotally mounted between the operating lever (16) and the second locking means (14), characterized in, that in the stanchion (13) there is arranged at least one shoulder (32) designed to serve as a stop for an abutment surface (33) arranged at the lower end of the link (15) connected with the locking second means (14), when the operating lever (16) is located in its downward locking position and the two locking means (21, 14) are in their locked position, that the two locking means (21, 14) in locked position are loaded by a spring (27), which in the released position of said locking means is expanded, that the spring (27) is arranged on the link (15) between its pivot axle (28) of the link to the lever (16) and an abutment surface (34) arranged on the second locking means (14) and that the pivot axle (29) of the link (15) to the second locking means (14) is limitedly displaceable in sustantially vertical direction with respect to this.

2. A device according to claim 1, characterized in, that the common pivot axle (29) of the link (15) and the second locking means (14) is limitedly displaceable in a groove (30) in the direction of displacement of said locking means (14).

3. A device according to claim 1, characterized in, that the spring (27) is arranged in the link (15) which at least partly is tubular.

4. A device according to claim 1, characterized in, that the first locking means (21) comprises a rod (17) at the upper end of which a clapper (24) is pivotally mounted, which is designed to rotate about a fixed pivot pin (23) arranged at a distance from the bearing (22) of the rod (17) into and out of engagement with the locking member (26) at the displacement of the rod (17) along the stanchion (13).

5. A device according to claim 4, characterized in, that between the rod (17) and the clapper (24) there is pivotally arranged a toggle joint (35) comprising a first toggle joint link (36) fixedly mounted in the stanchion (13) about a shaft pivot (37) and a second toggle joint link (39), which through a pivot pin (22) is pivotally connected to the clapper (24) on one hand and to the first toggle joint link (36) through a toggle joint axle (38) on the other hand and that a stop (40) is arranged in the stanchion (13) which prevents the toggle joint link (36) to take a wholly extended position.

**Patentansprüche**

1. An Rungen (13) einer Fahrzeugplattform (10) oder dergleichen angeordnete Vorrichtung mit mindestens einem ersten Verriegelungsglied (21), das in der Runge bewegbar angeordnet ist zum Zusammenwirken mit einem Verriegelungselement (26) an der Bordwand (25) der Plattform; mindestens einem zweiten Verriegelungsglied (14) zur Verriegelung der Runge (13) gegenüber der Plattform (10) mittels einer an dieser befestigten Klemme (11) oder dergleichen; und einem Betätigungshebel (16) zur Betätigung sowohl der ersten als auch des zweiten Verriegelungsgliedes (21 und 14), wobei ein Kupplungsglied (15) zwischen Betätigungshebel (16) und dem zweiten Verriegelungsglied (14) schwenkbar gelagert ist, dadurch gekennzeichnet, daß in der Runge (13) mindestens ein Vorsprung (32) vorgesehen ist als Anschlag für eine Gegenfläche (33) am unteren Ende des mit dem zweiten Verriegelungsglied (14) verbundenen Kupplungsgliedes (15), wobei der Betätigungshebel (16) sich in seiner unteren Schließstellung und die beiden Verriegelungselemente (21, 24) sich in ihrer geschlossenen, Stellung befinden; daß die beiden Verriegelungselemente (21, 24) in der verriegelten Stellung durch eine Feder (27) gehalten werden, die im gelösten Zustand dieser Verriegelungselemente entspannt ist; daß die Feder (27) an dem Kupplungsglied (15) zwischen dessen Schwenkbolzen (28) am Betätigungshebel (16) und einer Widerlagerfläche (34) an dem zweiten Verriegelungsglied (14) eingespannt ist; und daß der Kupplungsbolzen (29) des Kupplungsglies (15) zum zweiten Verriegelungsglied (14) geringfügig im wesentlichen in Rungen-Längsrichtung verschiebbar ist.

2. Vorrichtung nach Anspruch 1, dadurch gekennzeichnet, daß der gemeinsame Kupplungsbolzen (29) von Kupplungsglied (15) um zweitem Verriegelungsglied (14) in einer Nut (30) in Verschieberichtung des zweiten Verriegelungsglieds (14) begrenzt verschiebbar ist.

3. Vorrichtung nach Anspruch 1, dadurch gekennzeichnet, daß die Feder (27) in dem zumindest teilweise hohlen Kupplungsglied (15) angeordnet ist.

4. Vorrichtung nach Anspruch 1, dadurch gekennzeichnet, daß das erste Verriegelungsglied (21) eine Stange (17) aufweist, an deren oberem Ende ein Sperrhebel (24) angelenkt ist, der um eine rungenfeste Achse (23) in einem bestimmten Abstand von der Anlenkung (22a) der Stange (17) in und außer Eingriff mit dem bordwandfesten Verriegelungsbolzen (26) drehbar ist, wenn die Stange (17) in Längsrichtung verschoben wird.

5. Vorrichtung nach Anspruch 4, dadurch gekennzeichnet, daß zwischen der Stange (17) und dem Sperrhebel (24) schwenkbar ein Kniehebel (35) vorgesehen ist mit einem ersten Kniehebelelement (36), das auf einer rungenfesten Schwenkachse (22b) einerseits mit dem Sperrhebel (24) und über eine Kniehebelachse (38) andererseits mit dem ersten Kniehebelelement (36) verbunden ist, und daß ein Anschlag (40) in der Runge (13) angeordnet ist, der verhindert, daß der Kniehebel (36) die voll durchgedrückte Stellung einnimmt.

## Revendications

1. Dispositif pour montants (13) de plate-formes de véhicule (10) ou équivalent et comportant au moins un premier moyen de blocage (21) disposé de manière déplaçable dans le montant et prévu pour coopérer avec un élément de blocage (26) sur la ridelle (25) de la plate-forme, au moins un second moyen de blocage (14) prévu pour bloquer le montant (13) par rapport à la plate-forme (10) à l'aide d'un étrier (11) ou équivalent fixé à la plate-forme, et un levier d'actionnement (16) destiné à actionner à la fois les premier et second moyens de blocage (21 et 14), sur lequel un mécanisme (15) est monté de façon pivotante entre le levier d'actionnement (16) et le second moyen de blocage (14), caractérisé en ce qu'il est prévu au moins un épaulement (32) dans le montant (13) destiné à servir de butée pour au moins une surface d'appui (33) disposée à l'extrémité inférieure du mécanisme (15) reliée au second moyen de blocage (14), lorsque le levier d'actionnement (16) se trouve dans sa position de blocage vers le bas et que les deux moyens de blocage (21, 14) sont dans leur position bloquée, en ce que les deux moyens de blocage (21, 14) en position bloquée sont chargés par un ressort (27) qui, en position relâchée des dits moyens de blocage, est détendu, en ce que le ressort (27) est disposé dans le mécanisme (15) entre l'axe de pivotement (28) du mécanisme sur le levier (16) et une surface d'appui (34) sur le second moyen de blocage (14) et en ce que l'axe de pivotement (29) de mécanisme (15) sur le second moyen de blocage (14) peut se déplacer de façon limitée dans une direction sensiblement verticale par rapport à celui-ci.

2. Dispositif selon la revendication 1, caractérisé en ce que l'axe de pivotement commun (29) du mécanisme (15) et du second moyen de blocage (14) peut se déplacer de façon limitée dans une rainure (30) dans la direction de déplacement du dit moyen de blocage (14).

3. Dispositif selon la revendication 1, caractérisé en ce que le ressort (27) est disposé dans le mécanisme (15) qui est au moins partiellement tubulaire.

4. Dispositif selon la revendication 1, caractérisé en ce que le premier moyen de blocage (21) comporte une tige (17) à l'extrémité supérieure de laquelle est monté de façon pivotante un loquet (24) qui est prévu pour tourner autour d'un axe de pivotement fixe (23) disposé à une certaine distance de l'appui (22a) de la tige (17) en et hors engagement avec l'élément de blocage (26) lors du déplacement de la tige (17) le long du montant (13).

5. Dispositif selon la revendication 4, caractérisé en ce qu'une genouillère (35) est disposée de façon pivotante entre la tige (17) et le loquet (24) et comporte un premier mécanisme à genouillère (36) monté de manière fixe dans le montant (13) sur un axe de pivotement (37) et un second mécanisme à genouillère (39) qui, par l'intermédiaire d'un axe de pivotement (22b) est relié de façon pivotante au loquet (24) d'une part et au premier mécanisme à genouillère (36) par l'intermédiaire d'un axe de genouillère (38) d'autre part, et en ce qu'une butée (40) est disposée dans le montant (13) et empêche le mécanisme de genouillère (36) de prendre une position totalement allongée.

**FIG 1**

**FIG 2**

**FIG 3**

# FIG 4

# FIG 5

# FIG 6

# FIG 8

# FIG 7